# EUROPÄISCHE PATENTSCHRIFT

(11) **EP 1 536 600 B1**
(45) Veröffentlichungstag und Bekanntmachung des Hinweises auf die Patenterteilung: **06.06.2012**
(21) Anmeldenummer: 04023815.6
(22) Anmeldetag: 06.10.2004
(51) Int. Cl.: H04W 40/12, H04L 12/56

(54) **Verfahren zum Betrieb einer Kommunikationsstrecke zwischen zumindest zwei Kommunikationsendgeräten**
Method of operation of a communication channel between at least two communication terminals
Méthode de mise en oeuvre d'une voie de communication entre au moins deux dispositifs de communication

(30) Priorität: 25.11.2003 DE 10354943
(43) Veröffentlichungstag der Anmeldung: 01.06.2005
(73) Patentinhaber: SIEMENS AKTIENGESELLSCHAFT, 80333 München (DE)
(72) Erfinder: Franzen, Michael, 46395 Bocholt (DE)

(56) Entgegenhaltungen:
- EP-A- 1 063 819
- WO-A-00/54539
- US-A1- 2002 049 561
- US-B1- 6 628 639

## Beschreibung

Die Erfindung betrifft ein Verfahren zum Betrieb einer Kommunikationsstrecke zwischen zumindest zwei Kommunikationsendgeräten, bei dem zumindest zu einem Anfangszeitpunkt die zwei Kommunikationsendgeräte über zumindest eine Zwischenstation verbunden sind und über diese miteinander Signale austauschen, wobei sowohl die Zwischenstation als auch die Kommunikationsendgeräte die Güte der Signalübertragung aus Richtung ihrer jeweiligen Vorgänger-Station/(en) bestimmen.

In Multi-Hop-Netzwerken (= Mehrknotennetzwerken), wie sie zum Beispiel für die vierte Generation von Mobilfunknetzen geplant sind, sollen neben Verbindungen zwischen einem Endgerät und einer Basis-Station, wie sie in der dritten Mobilfunkgeneration ausschließlich angewendet werden, auch Verbindungen ermöglich werden, die über mehrere Geräte, zum Beispiel auch andere Endgeräte, laufen, bevor sie eine Basis-Station oder ein anderes Endgerät erreichen. Der entscheidende Punkt bei Multi-Hop-Netzwerken ist der, dass die einzelnen Basis-Stationen, die im folgenden auch mit Hops (= Zwischenknoten) bezeichnet werden, selber über die gleiche Luftschnittstelle, über die auch die Endknoten arbeiten, miteinander verbunden sind. Dies ist der Unterschied zu gängigen Mobilfunknetzen, bei denen die Zwischenknoten über kabelgebundene Netze oder festeingerichtete Richtfunkstrecken verbunden sind.

Wenn sich die an einer Verbindung beteiligten Knoten beispielsweise bewegen, zum Beispiel ein Knoten mit Vermittlungsfunktion in einem Fahrzeug, kann es passieren, dass einige Zwischenknoten unnötig werden und sie aus der Verbindung genommen werden können. Das kann sich zum Beispiel so äußern, dass zwei nebeneinanderstehende Endgeräte im Endeffekt nicht mehr über die Basis-Station verbunden sind, wie dies heute üblich ist, sondern direkt miteinander kommunizieren.

Im Bereich DECT (= Digital European Cordless Telephone), also der schnurlosen Telephonie, ist die direkte Kommunikation zwischen zwei DECT-Kommunikationsendgeräten bereits möglich, ohne über eine Basis-Station kommunizieren zu müssen. Diese Direktverbindung wird jedoch nicht automatisch, sondern manuell erstellt.

Bei der Optimierung einer Kommunikationsstrecke zwischen zwei Kommunikationsendgeräten besteht das Problem darin, die Möglichkeit zum Einrichten einer neuen Direktverbindung zwischen den Endgeräten oder eine Verbindung der Endgeräte über eine günstigere Routenlänge zu erkennen.

In der Offenlegungsschrift US 2002086676 A1 wird bereits ein Verfahren beschrieben, das Direktverbindungen, basierend auf der Kenntnis der geographischen Position einzelner Engeräte, initiiert. Um dieses Verfahren umsetzen zu können, muss das Netzwerk quasi als zentrale Instanz die Position der einzelnen Endgeräte kennen und überwachen und gegebenenfalls an einzelne Endgeräte eine Aufforderung zum Initiieren einer Direktverbindung senden.

Des weiteren existieren Ad-Hoc-Routing-Protokolle, zum Beispiel AODV (= Ad hoc On Demand Distance Vector routing), die mit den Einträgen in den Routing-Tabellen eine maximale Gültigkeitsdauer für das Bestehen eines Zwischenknotens bestimmen, nach deren Ablauf der nächste Zwischenknoten erneut gesucht werden muss. Ein Ablauf diese Gültigkeitsdauer, oder auch mit Timeout bezeichnet, führt dann gegebenenfalls zum Initiieren von neuen Direktverbindungen oder zur Bestätigung des existierenden Next-Hops als Zwischenknoten.

Der Nachteil der örtlichen Lokalisierung der einzelnen Endgeräte über das Netzwerk ist, dass das Netzwerk als zentrale Kontrolleinheit nur durch einen relativ hohen Hardwareaufwand realisiert werden kann. Hierdurch wird der Netzwerkaufbau insgesamt sehr komplex und unflexibel.

Verfahren, bei denen über Einträge in Routing-Tabellen eine maximale Gültigkeitsdauer für das Bestehen eines Zwischenknotens bestimmt wird, nach deren Ablauf der nächste Zwischenknoten erneut gesucht werden muss, erweisen sich als besonders träge. Hierdurch ist der Stromverbrauch während einer Vermittlungsaktion unnötig hoch. Außerdem verursachen die zyklisch flutwellenartig gesendeten Wegesuch-Pakete, diese Aussendung wird meistens mit "flooding" bezeichnet, eine unnötig hohe Netzlast.

Aus aus der US 2002/0049561 A1 ist ein Verfahren bekannt, bei dem Einträge in Routing Tabellen aktualisiert werden.

Es ist daher Aufgabe der Erfindung, ein Verfahren zum Betrieb einer Kommunikationsstrecke zwischen zumindest zwei Kommunikationsendgeräten zu finden, welches im Vergleich zu den bisher bekannten Verfahren eine automatische Herstellung von Verbindung zwischen Kommunikationsendgeräte über eine günstigere Routenlänge schneller und effektiver ermöglicht oder auch Direktverbindungen zwischen Kommunikationsendgeräten ermöglicht.

Diese Aufgabe der Erfindung wird durch das Verfahren mit den Merkmalen des Patentanspruches 1 gelöst. Vorteilhafte Weiterbildungen der Erfindung sind Gegenstand untergeordneter Patentansprüche.

Der Erfinder hat erkannt, dass es möglich ist, sobald die Empfangs-/Übertragungssituation eines jeden Zwischenknotens und eines jeden Kommunikationsendgerätes bekannt ist, die Kommunikationsstrecke durch Trennen von für die Übertragung ungünstigen Zwischenstationen oder durch Hinzunahme bisher nicht genutzter Verbindungen zwischen Zwischenstationen die Signalübertragung zwischen zumindest zwei Kommunikationsendgeräten zu verbessern.

Entsprechend diesem Erfindungsgedanken schlägt der Erfinder vor, das an sich bekannte Verfahren zum Betrieb einer Kommunikationsstrecke zwischen zumindest zwei Kommunikationsendgeräten, bei dem zumindest zu einem Anfangszeitpunkt die zwei Kommunikationsendgeräte über zumindest eine Zwischenstation verbunden sind und über diese miteinander Signale austauschen, wobei sowohl die Zwischenstation als auch die Kommunikationsendgeräte die Güte der Signalübertragung aus Richtung ihrer jeweiligen Vorgänger-Station/(en) bestimmen, dahingehend zu verbessern, dass die zumindest eine Zwischenstation und die Kommunikationsendgeräte außerdem zyklisch die Signalübertragungsgüte aus Richtung des Vorgängerknotens ihrer Vorgängerknoten messen und ihre gemessene Signalübertragungsgüte zumindest einer benachbarten Zwischenstation oder zumindest einem benachbarten Kommunikationsendgerät übermitteln und jede Zwischenstation und jedes Kommunikationsendgerät einen Vergleich der eigenen gemessenen und der übermittelten Signalübertragungsgüte vornimmt und in Abhängigkeit des Vergleichs bestehende Verbindungen getrennt und neue Verbindungen geschlossen werden.

Hierdurch ist es möglich, einen oder mehrere Zwischenstationen, meist mit Hops bezeichnet, aus der Kommunikationstrecke herauszunehmen oder bei Bedarf einen oder mehrere Zwischenstationen in der Kommunikationstrecke hinzuzunehmen. Daraus ergibt sich der Vorteil, dass die Kommunikationsstrecke zwischen zumindest zwei Kommunikationsendgeräten, zum Beispiel hinsichtlich der Routenlänge, kürzer oder auch effektiver gestaltet werden kann.

Für das Verfahren ist es günstig, wenn die Güte der Signalübertragung durch Messung des Signal-Rauschverhältnisses (SNR = Signal-to-Noise-Ratio) und/oder der Bitfehlerrate (BER = Bit Error Rate) und/oder der Signalfeldstärke (RSSI = Receives Signal Strength Indicator) und/oder der Packet Error Rate (= PER) oder die Error Vector Magnitude (= EVM) bestimmt wird.

Weiterhin ist es vorteilhaft, wenn ein Kommunikationsendgerät auch als Zwischenstation verwendet wird. Hierdurch ist es beispielsweise möglich, dass drei Mobilfunkendgeräte miteinander kommunizieren ohne einen Zwischenknoten in Form einer Basis-Station zu verwenden. Hierdurch können Ressourcen, zum Beispiel im Mobilfunknetz, eingespart werden, da zum Beispiel Nahverbindungen von Mobilfunkendgeräten nicht mehr über die Basisstationen ablaufen müssen, wodurch deren Energieverbrauch gesenkt werden kann und die Ressourcen der Luftschnittstelle geschont werden können.

Im Verfahren ist es auch angedacht, dass eine Zwischenstation und/oder ein Kommunikationsendgerät, wenn diese/dieses eine schlechtere Signalübertragungsgüte zur Vorgängerstation aufweist als die nachfolgende Zwischenstationen und/oder Kommunikationsendgeräte zur selben Vorgängerstation, die jeweils benachbarten Zwischenstationen und/oder Kommunikationsendgeräte auffordert miteinander zu kommunizieren.

Ein solche Aufforderung miteinander zu kommunizieren, kann beispielsweise durch Austausch von Nachrichten realisiert werden. Eine Zwischenstation, die für eine Übertragung eigentlich überflüssig ist, teilt den beiden Knoten, die sich miteinander verbinden sollen, die jeweils dafür nötigen Sende- und Empfangsressourcen mit. Im einfachsten Fall teilt die Zwischenstation einem ersten Knoten mit, auf welcher Ressource er den andere zweiten Knoten empfangen kann. Dem zweiten Knoten teilt die Zwischenstation mit, auf welcher Ressource er den ersten Knoten empfangen kann. Außerdem muss mit beiden Knoten ein Zeitpunkt für die Umschaltung vereinbart werden, damit beide Knoten synchron umschalten.

Alternativ und ergänzend dazu kann eine Zwischenstation und/oder ein Kommunikationsendgerät, wenn diese/dieses eine schlechtere Signalübertragungsgüte zur Vorgängerstation aufweist als die nachfolgenden Zwischenstationen und/oder Kommunikationsendgeräte zur selben Vorgängerstation, von den jeweils benachbarten Zwischenknoten und/oder Kommunikationsendgeräte aufgefordert werden die Verbindung zu den jeweils benachbarten Zwischenstationen und/oder Kommunikationsendgeräte zu trennen. Auch in diesem Fall wäre es vorteilhaft, wenn der zu trennende Zwischenknoten die Koordination übernimmt, weil er ohnehin schon eine Verbindung zu den beiden anderen beteiligten Knoten hat.

Es kann vorteilhaft sein, einen Schwellwert für die Signalübertragungsgüte zu definieren, ab dem, wenn er unterschritten wird, ein Kommunikationsendgerät und/oder eine Zwischenstation Verbindungen zu andere Zwischenstationen und/oder Kommunikationsendgeräten mit besserer Signalübertragungsgüte sucht.

Zusätzliche Merkmale und Vorteile der Erfindung ergeben sich aus der nachfolgenden Beschreibung bevorzugter Ausführungsbeispiele unter Bezugnahme auf die Zeichnungen.

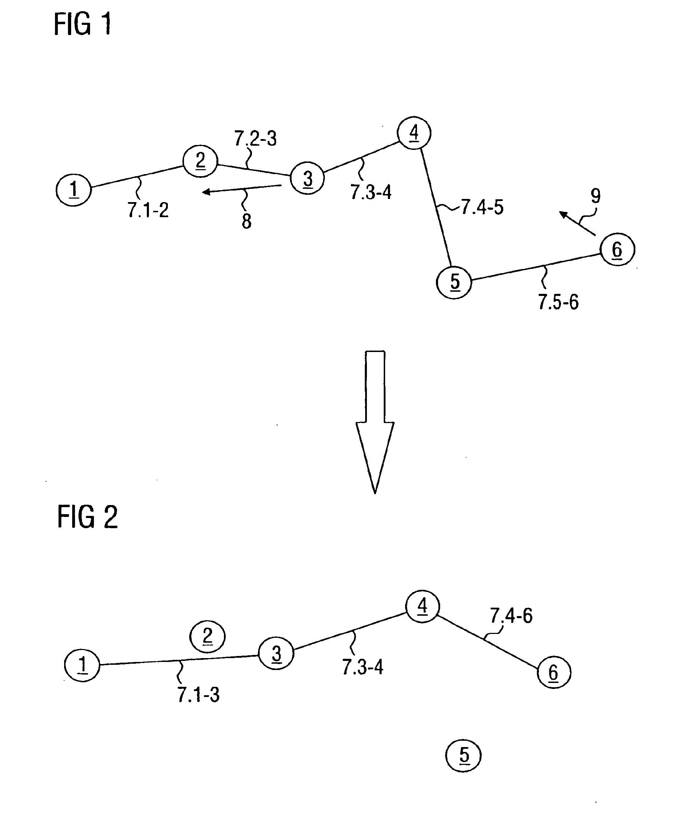

Im Folgenden wird die Erfindung anhand bevorzugter Ausführungsbeispiele mit Hilfe der Figuren 1 bis 4 beschrieben, wobei in den Figuren und den Patenansprüchen folgende Bezugszeichen verwendet wurden: 1: Erstes Endgerät; 2: Zwischenknoten; 3: Zwischenknoten; 4: Zwischenknoten; 5: Zwischenknoten; 6: Zweites Endgerät; 7.1-2: Verbindung erstes Endgerät-Zwischenknoten 2; 7.1-3: Verbindung erstes Endgerät-Zwischenknoten 3; 7.1-6: Verbindung erstes Endgerät-zweites Endgerät; 7.2-3: Verbindung Zwischenknoten 2-Zwischenknoten 3; 7.2-6: Verbindung Zwischenknoten 2-zweites Endgerät; 7.3-4: Verbindung Zwischenknoten 3-Zwischenknoten 4; 7.4-5: Verbindung Zwischenknoten 4-Zwischenknoten 5; 7.4-6: Verbindung Zwischenknoten 4-zweites Endgerät; 7.5-6: Verbindung Zwischenknoten 5-zweites Endgerät; 8: Bewegung eines Zwischenknotens; 9: Bewegung eines Endgerätes.
- Figur 1:: Schematische Darstellung einer Kommunikationsverbindung zweier Endgeräte in einem Mobilfunknetz über mehrere Zwischenknoten;
- Figur 2:: Die Kommunikationsverbindung aus Figur 1, nachdem das neue Verfahren angewendet wurde;
- Figur 3:: Schematische Darstellung einer Kommunikationsverbindung von zwei Endgeräten in einem Mobilfunknetz über einen Zwischenknoten, wobei ein Endgerät sich örtlich dem zweiten Endgerät nähert;
- Figur 4:: Die Kommunikationsverbindung aus Figur 3, nachdem das neue Verfahren angewendet wurde.

Die Figur 1 zeigt in einer schematische Darstellung Kommunikationsverbindungen 7.1-2, 7.2-3, 7.3-4, 7.4-5 und 7.5-6 zweier Endgeräte 1 und 6 in einem Mobilfunknetz über mehrere Zwischenknoten 2 bis 5. Der Zwischenknoten 2, der Zwischenknoten 4 und der Zwischenknoten 5 können beispielsweise feste Basis-Stationen des Mobilfunknetzes sein. Der Zwischenknoten 3 soll in dieser Darstellung mobil sein, beispielsweise eine fahrbare Basis-Station, die sich auf das erste Endgerät 1 zubewegt. Auch das zweite Endgerät 6 soll sich bewegen und zwar auf den Zwischenknoten 4. Die Bewegung des Zwischenknoten 3 zum ersten Endgerät 1 hin und die Bewegung des zweiten Endgerätes 6 zum Zwischenknoten 4 hin wird durch die Pfeile mit den Bezugszeichen 8 und 9 angedeutet.

Im neuen Verfahren teilt jeder Zwischenknoten 2 bis 5 seinem Nachfolgerknoten (Next-Hop) oder dem benachbarten Endgerät 1 oder 6 die eigene Empfangsressource zum Vorgängerknoten mit. In regelmäßigen und zyklischen Abständen messen die Knoten auf den Empfangsressourcen ihrer Vorgängerknoten mindestens eine Größe, die die Qualität der Nachrichtenübertragung charakterisiert, zum Beispiel das Signal-Rausch-Verhältnis oder die Bitfehlerrate, und teilen das Messergebnis dem zugehörigen Vorgängerknoten mit. Diese Mitteilung kann eventuell unterbleiben, wenn das Messergebnis einen Empfang unter einer festgesetzten Mindestschwelle anzeigt.

Erhält ein Zwischenknoten ein solches Messergebnis so entscheidet er, aufgrund eigener Messungen und den erhaltenen Ergebnissen seines Next-Hops, ob er in der Multi-Hop-Verbindung weiterhin benötigt wird. Ist das nicht der Fall, leitet er mit dem Vorgänger- und dem Nachfolger-Knoten eine Prozedur ein, die den Aufbau einer Direktverbindung zwischen diesen zum Ziel hat. Am Beispiel der Zwischenknoten 2 und 5 soll das neue Verfahren in Figur 1 erläutert werden.

Der Zwischenknotens 3 nähert sich lokal an das erste Endgerät 1 an. Analog nähert sich das zweite Endgerätes 6 an den Zwischenknoten 4 an. Dies wird durch die Pfeile 8 und 9 symbolisiert.

Im neuen Verfahren teilt der Zwischenknoten 2 dem Endgerät 1 seine Empfangsressource aus Richtung Zwischenknoten 3 mit. Es wird also zum Beispiel die Frequenz und der Zeitschlitz der Verbindung 7.2-3 zwischen dem Zwischenknoten 2 und dem Zwischenknoten 3 an das Endgerät 1 übermittelt. Außerdem teilt der Zwischenknoten 2 dem Zwischenknoten 3 seine Empfangsressource aus Richtung des Endgerätes 1 mit, also zum Beispiel die Frequenz und den Zeitschlitz der Verbindung 7.1-2.

Das Endgerät 1 misst regelmäßig auf der ihm mitgeteilten Empfangsressource, das heißt auf der Verbindung 7.2-3, den Empfang, also zum Beispiel das Signal-Rausch-Verhältnis, und sendet seine Ergebnisse an den Zwischenknoten 3. Entsprechend misst der Zwischenknoten 3 regelmäßig auf der ihm mitgeteilten Empfangsressource, das heißt auf der Verbindung 7.1-2 den Empfang und sendet seine Ergebnisse auch an den Zwischenknoten 2.

Immer, wenn der Zwischenknoten 2 vom Endgerät 1 ein Messergebnis erhält, vergleicht er dieses mit seinen eigenen Messungen beim Empfang auf der Verbindung 7.2-3.

Entsprechend erhält der Zwischenknoten 2 vom Zwischenknoten 3 ein Messergebnis und er vergleicht dieses mit seinen eigenen Messungen beim Empfang auf der Verbindung 7.1-2.

Stellt der Zwischenknoten 2 bei dem Vergleich fest, dass das Endgerät 1 auf der Verbindung 7.2-3 besser empfängt als er selber, so initiiert er seinen eigenen Austritt beziehungsweise seine Herausnahme aus der Verbindung. Das gleiche gilt für den Vergleich bezüglich der Verbindung 7.1-2.

Analog zur Herausnahme/Austritt aus der Verbindung des Zwischenknotens 2 funktioniert dies beim Zwischenknoten 5. Im neuen Verfahren teilt der Zwischenknoten 5 dem Zwischenknoten 4 seine Empfangsressource aus Richtung Endgerät 6 mit. Es wird also zum Beispiel die Frequenz und der Zeitschlitz der Verbindung 7.5-6 zwischen dem Zwischenknoten 5 und dem Endgerät 6 an den Zwischenknoten 4 übermittelt. Außerdem teilt der Zwischenknoten 5 dem Endgerät 6 seine Empfangsressource aus Richtung des Zwischenknotens 4 mit, also aus Richtung der Verbindung 7.4-5.

Der Zwischenknoten 4 misst regelmäßig auf der ihm mitgeteilten Empfangsressource, das heißt auf der Verbindung 7.5-6, den Empfang, also zum Beispiel das Signal-Rausch-Verhältnis, und sendet seine Ergebnisse an den Zwischenknoten 5. Entsprechend misst auch das Endgerät 6 regelmäßig auf der ihm mitgeteilten Empfangsressource, das heißt auf der Verbindung 7.4-5, den Empfang und sendet seine Ergebnisse auch an den Zwischenknoten 5.

Immer, wenn der Zwischenknoten 5 vom Zwischenknoten 4 ein Messergebnis erhält, vergleicht er dieses mit seinen eigenen Messungen beim Empfang auf der Verbindung 7.5-6. Entsprechend erhält der Zwischenknoten 5 vom Endgerät 6 ein Messergebnis und er vergleicht dieses mit seinen eigenen Messungen beim Empfang auf der Verbindung 7.4-5.

Stellt der Zwischenknoten 5 bei dem Vergleich fest, dass der Zwischenknoten 4 auf der Verbindung 7.5-6 besser empfängt als er selber, so initiiert er seinen eigenen Austritt beziehungsweise seine Herausnahme aus der Verbindung. Das gleich gilt für den Vergleich bezüglich der Verbindung 7.4-5.

Die Figur 2 zeigt die neuen Kommunikationsverbindungen der beiden Endgeräte 1 und 6, nachdem das neue Verfahren angewendet wurde. Das erste Endgerät 1 weist eine neue Verbindung 7.1-3 zum Zwischenknoten 3 auf. Die Verbindungen 7.1-2 und 7.2-3 (Figur 1) zum Zwischenknoten 2 wurden getrennt. Auch das zweite Endgerät 6 weist eine neue Verbindung 7.4-6 zum Zwischenknoten 4 auf. Auch die nun ungünstiger gewordenen Verbindungen 7.4-5 und 7.5-6 (Figur 1) wurden getrennt. Die für die Kommunikation nicht genutzten oder nicht mehr notwendigen Zwischenknoten 2 und 5 sind der Übersichtlichkeit halber trotzdem in Figur 2 dargestellt. Durch diese "Herausnahme" von zwei Zwischenknoten 2 und 5 kann zum einen die Routenlänge zwischen den beiden Endgeräten 1 und 6 verkürzt werden und durch die Herausnahme von Zwischenknoten kann auch Strom eingespart werden.

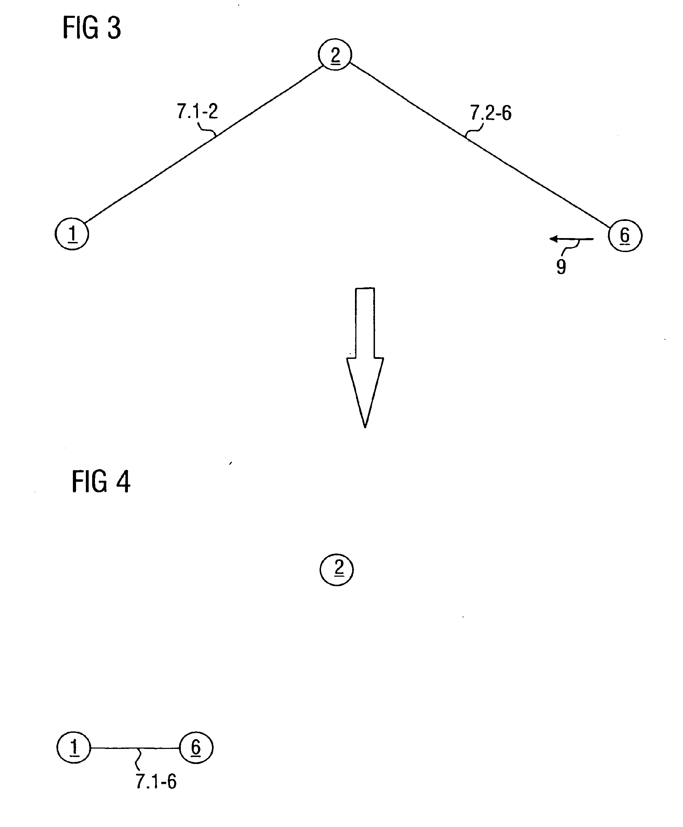

Die Figur 3 zeigt in einer schematische Darstellung die Kommunikationsverbindungen 7.1-2 und 7.2-6 zweier Endgeräte 1 und 6 in einem Mobilfunknetz über einen Zwischenknoten 2. Das zweite Endgerät 6 bewegt sich auf das erste Endgerät 1 zu. Dies ist durch den Pfeil mit den Bezugszeichen 9 symbolisiert.

Im neuen Verfahren bestimmt, analog zur Beschreibung in Figur 1, jede Komponente der Kommunikationsstrecke, also der Zwischenknoten 2 und die Endgeräte 1 und 6, die eigene Empfangsressource beziehungsweise die Qualität des empfangenen Signals und teilt das Ergebnis dem benachbarten Endgerät 1 und 6 oder dem Zwischenknoten 2 mit. Beispielswiese bestimmt der Zwischenknoten 2 die Feldstärke des Signals und übermittelt das Ergebnis dem ersten Endgerät 1 und dem zweiten Endgerät 6. Auch die Endgeräte 1 und 6 bestimmen die Feldstärke des Signals und übermitteln das Ergebnis dem Zwischenknoten 2.

Aufgrund der lokalen Annäherung des zweiten Endgerätes 6 an das erste Endgerät 1 wird bei einer Feldstärkemessung des übertragenen Signals vom Zwischenknoten 2 zu einer bestimmten Zeit festgestellt, dass die Übertragungssituation zwischen den beiden Endgeräten 1 und 6 besser ist als über den "Umweg", über den Zwischenknoten 2. Der Zwischenknoten 2 setzt eine Prozedur in Gange, die die beiden Endgeräte 1 und 6 veranlasst eine neue Verbindung untereinander einzugehen.

Diese Situation ist in Figur 4 dargestellt. Die bisherigen Verbindungen 7.1-2 und 7.2-6 aus Figur 3 vom ersten Endgerät 1 zum Zwischenknoten und vom Zwischenknoten zu zweiten Endgerät 6 wurden getrennt. Die beiden Endgeräte 1 und 6 haben nun eine direkte Verbindung 7.1-6. Der für diese Verbindung 7.1-6 nicht genutzte Zwischenknoten 2 ist trotzdem in Figur 4 dargestellt.

Umgekehrt könnte durch das neue Verfahren bei der erneuten lokalen Entfernung der beiden Endgeräte 1 und 6, wiederum der jetzt nicht genutzte Zwischenknoten 2 für die Kommunikation der beiden Endgeräte 1 und 6 genutzt werden. Die Verbindungen 7.1-2 und 7.2-6 aus Figur 3 würden dann wieder hergestellt werden.

Insgesamt wird durch das neue Verfahren durch das zyklische Messen der Signalübertragungsgüte aus Richtung des Vorgängerknotens und das Übermitteln der gemessenen Signalübertragungsgüte zumindest an eine benachbarten Zwischenstation oder zumindest an ein benachbartes Kommunikationsendgerät und jede Zwischenstation und jedes Kommunikationsendgerät einen Vergleich der eigenen gemessenen und der übermittelten Signalübertragungsgüte vornimmt und in Abhängigkeit des Vergleichs bestehende Verbindungen getrennt und neue Verbindungen geschlossen werden, ein neues Verfahren zur Verfügung gestellt, welches im Vergleich zu den bisher bekannten Verfahren eine automatische Herstellung von Verbindung zwischen Kommunikationsendgeräte über eine günstigere Routenlänge schneller und effektiver ermöglicht oder auch Direktverbindungen zwischen Kommunikationsendgeräten ermöglicht.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

## Patentansprüche

1. Verfahren zum Betrieb einer Kommunikationsstrecke zwischen zumindest zwei Kommunikationsendgeräten (1, 6), bei dem zumindest zu einem Anfangszeitpunkt die zwei Kommunikationsendgeräte (1, 6) über zumindest eine Zwischenstation (2 bis 5) verbunden sind und über diese miteinander Signale austauschen, wobei sowohl die Zwischenstation (2 bis 5) als auch die Kommunikationsendgeräte (1, 6) die Güte der Signalübertragung aus Richtung ihrer jeweiligen Vorgänger-Station/(en) bestimmen,
**dadurch gekennzeichnet,**
**dass** die zumindest eine Zwischenstation (2 bis 5) und die Kommunikationsendgeräte (1, 6) außerdem zyklisch die Signalübertragungsgüte aus Richtung des Vorgängerknotens ihrer Vorgängerknoten messen und ihre gemessene Signalübertragungsgüte zumindest einer benachbarten Zwischenstation (2 bis 5) oder zumindest einem benachbarten Kommunikationsendgerät (1, 6) übermitteln und jede Zwischenstation (2 bis 5) und jedes Kommunikationsendgerät (1, 6) einen Vergleich der eigenen gemessenen und der übermittelten Signalübertragungsgüte vornimmt und in Abhängigkeit des Vergleichs bestehende Verbindungen getrennt und neue Verbindungen geschlossen werden.

2. Verfahren gemäß dem voranstehenden Patentanspruch 1,
**dadurch gekennzeichnet,**
**dass** die Güte der Signalübertragung durch Messung des Signal-Rauschverhältnisses, SNR, und/oder der Bitfehlerrate , BER, und/oder der Signalfeldstärke , RSSI, und/oder Packet Error Rate , PER, oder die Error Vector Magnitude, EVM, bestimmt wird.

3. Verfahren gemäß einem der voranstehenden Patentansprüche 1 und 2,
**dadurch gekennzeichnet,**
**dass** ein Kommunikationsendgerät (1, 6) auch als Zwischenstation verwendet wird.

4. Verfahren gemäß einem der voranstehenden Patentansprüche 1 bis 3,
**dadurch gekennzeichnet,**
**dass** eine Zwischenstation (2 bis 5) und/oder ein Kommunikationsendgerät (1, 6), wenn diese/dieses eine schlechtere Signalübertragungsgüte zur Vorgängerstation aufweist als die nachfolgende Zwischenstationen (2 bis 5) und/oder Kommunikationsendgeräte (1, 6) zur selben Vorgängerstation, die jeweils benachbarten Zwischenstationen (2 bis 5) und/oder Kommunikationsendgeräte (1, 6) auffordert miteinander zu kommunizieren.

5. Verfahren gemäß einem der voranstehenden Patentansprüche 1 bis 4,
**dadurch gekennzeichnet,**
**dass** eine Zwischenstation (2 bis 5) und/oder ein Kommunikationsendgerät (1, 6), wenn diese/dieses eine schlechtere Signalübertragungsgüte aufweist als die benachbarten Zwischenstationen (2 bis 5) und/oder Kommunikationsendgeräte (1, 6), von den jeweils benachbarten Zwischenstationen (2 bis 5) und/oder Kommunikationsendgeräten (1, 6) aufgefordert wird, die Verbindung zu den jeweils benachbarten Zwischenstationen (2 bis 5) und/oder Kommunikationsendgeräte (1, 6) zu trennen.

6. Verfahren gemäß einem der voranstehenden Patentansprüche 1 bis 5,
**dadurch gekennzeichnet,**
**dass** ab Unterschreiten eines bestimmten Schwellwertes für die Signalübertragungsgüte eines Kommunikationsendgerätes (1, 6) und/oder einer Zwischenstation (2 bis 5) dieses/diese Verbindungen zu anderen Zwischenstationen (2 bis 5) und/oder Kommunikationsendgeräten (1, 6) mit besserer Signalübertragungsgüte sucht.

## Claims

1. Method for operation of a communication path between at least two communication terminals (1, 6), in which, at least at a start time, the two communication terminals (1, 6) are connected via at least one intermediate station (2 to 5) and interchange signals with one another via this intermediate station (2 to 5), with both the intermediate station (2 to 5) and the communication terminals (1, 6) determining the quality of signal transmission from the direction of their respective predecessor station or stations,
**characterized in that**
the at least one intermediate station (2 to 5) and the communication terminals (1, 6) also cyclically measure the signal transmission quality from the direction of the predecessor node to their predecessor node, and transmit their measured signal transmission quality at least to one adjacent intermediate station (2 to 5) or at least to one adjacent communication terminal (1, 6), and each intermediate station (2 to 5) and each communication terminal (1, 6) compares its own measured signal transmission quality with the transmitted signal transmission quality, and existing connections are disconnected, and new connections made as a function of the comparison.

2. Method according to the preceding Patent Claim 1,
**characterized in that**
the quality of the signal transmission is determined by measurement of the signal-to-noise ratio, SNR, and/or of the bit error rate, BER, and/or of the signal field strength, RSSI, and/or of the packet error rate, PER, and/or of the error vector magnitude, EVM.

3. Method according to one of the preceding Patent Claims 1 and 2, **characterized in that**
a communication terminal (1, 6) is also used as an intermediate station.

4. Method according to one of the preceding Patent Claims 1 to 3, **characterized in that**
an intermediate station (2 to 5) and/or a communication terminal (1, 6) request or requests the respective adjacent intermediate stations (2 to 5) and/or communication terminals (1, 6) to communicate with one another if it has/they have a poorer signal transmission quality to the predecessor station than do the subsequent intermediate stations (2 to 5) and/or communication terminals (1, 6) to the same predecessor station.

5. Method according to one of the preceding Patent Claims 1 to 4, **characterized in that**
an intermediate station (2 to 5) and/or a communication terminal (1, 6) is/are requested by the respectively adjacent intermediate stations (2 to 5) and/or communication terminals (1, 6) to disconnect the connection to the respectively adjacent intermediate stations (2 to 5) and/or communication terminals (1, 6) if it has/they have a poorer signal transmission quality than the adjacent intermediate stations (2 to 5) and/or communication terminals (1, 6).

6. Method according to one of the preceding Patent Claims 1 to 5, **characterized in that**,
if a specific threshold value for the signal transmission quality of a communication terminal (1, 6) and/or of an intermediate station (2 to 5) is undershot, it searches for connections to other intermediate stations (2 to 5) and/or communication terminals (1, 6) with a better signal transmission quality.

## Revendications

1. Procédé d'exploitation d'une voie de communication entre au moins deux terminaux de communication (1, 6), dans lequel, au moins à un instant de départ, les deux terminaux de communication (1, 6) sont reliés via au moins une station intermédiaire (2 à 5) et échangent entre eux des signaux via celle-ci, tant la station intermédiaire (2 à 5) que les terminaux de communication (1, 6) déterminant la qualité de la transmission des signaux venant de leur(s) station(s) précédente(s) respective(s), **caractérisé en ce que** l'au moins une station intermédiaire (2 à 5) et les terminaux de communication (1, 6) mesurent en outre cycliquement la qualité de transmission des signaux venant du noeud précédent de leurs noeuds précédents et transmettent leur qualité de transmission des signaux mesurée au moins à une station intermédiaire (2 à 5) voisine ou au moins à un terminal de communication (1, 6) voisin et chaque station intermédiaire (2 à 5) et chaque terminal de communication (1, 6) effectue une comparaison entre sa propre qualité de transmission des signaux mesurée et la qualité de transmission des signaux transmise et des liaisons existantes sont coupées et de nouvelles liaisons sont établies en fonction de la comparaison.

2. Procédé selon la revendication précédente 1, **caractérisé en ce que** la qualité de la transmission des signaux est déterminée par mesure du rapport signal/bruit, SNR, et/ou du taux d'erreur binaire, BER, et/ou de l'intensité de champ des signaux, RSSI, et/ou du taux d'erreur de paquets, PER, ou de la magnitude du vecteur d'erreur, EVM.

3. Procédé selon l'une des revendications précédentes 1 et 2, **caractérisé en ce qu'**un terminal de communication (1, 6) est également utilisé en tant que station intermédiaire.

4. Procédé selon l'une des revendications précédentes 1 à 3, **caractérisé en ce qu'**une station intermédiaire (2 à 5) et/ou un terminal de communication (1, 6), si celle-ci resp. celui-ci présentent une moins bonne qualité de transmission des signaux vers la station précédente en comparaison avec les stations intermédiaires (2 à 5) et/ou terminaux de communication (1, 6) suivants vers la même station précédente, invitent les stations intermédiaires (2 à 5) et/ou terminaux de communication (1, 6) respectivement voisins à communiquer entre eux.

5. Procédé selon l'une des revendications précédentes 1 à 4, **caractérisé en ce qu'**une station intermédiaire (2 à 5) et/ou un terminal de communication (1, 6), si celle-ci resp. celui-ci présentent une moins bonne qualité de transmission des signaux en comparaison avec les stations intermédiaires (2 à 5) et/ou terminaux de communication (1, 6) voisins, sont invités par les stations intermédiaires (2 à 5) et/ou terminaux de communication (1, 6) respectivement voisins à couper la liaison avec les stations intermédiaires (2 à 5) et/ou terminaux de communication (1, 6) respectivement voisins.

6. Procédé selon l'une des revendications précédentes 1 à 5, **caractérisé en ce que**, à partir du dépassement par le bas d'une valeur seuil déterminée pour la qualité de transmission des signaux d'un terminal de communication (1, 6) et/ou d'une station intermédiaire (2 à 5), celui-ci resp. celle-ci cherchent des liaisons avec d'autres stations intermédiaires (2 à 5) et/ou terminaux de communication (1, 6) avec une meilleure qualité de transmission des signaux.
